(19) Europäisches Patentamt

European Patent Office

Office européen des brevets

(11) Publication number : **0 397 380 B1**

(12) **EUROPEAN PATENT SPECIFICATION**

(45) Date of publication of patent specification :
14.07.93 Bulletin 93/28

(51) Int. Cl.⁵ : **B60C 3/04**

(21) Application number : **90304766.0**

(22) Date of filing : **02.05.90**

(54) Radial tyre.

(30) Priority : **06.05.89 JP 113963/89**

(43) Date of publication of application :
**14.11.90 Bulletin 90/46**

(45) Publication of the grant of the patent :
**14.07.93 Bulletin 93/28**

(84) Designated Contracting States :
**DE FR GB**

(56) References cited :
**EP-A- 0 273 558**
**EP-A- 0 323 519**
**JP-A- 6 061 305**
**JP-A-61 200 004**
**PATENT ABSTRACTS OF JAPAN, unexamined applications, M field, vol 9, no. 198 (M-404), August 15, 1985 THE PATENT OFFICE JAPANESE GOVERNMENT, page 40 M 404**

(73) Proprietor : **SUMITOMO RUBBER INDUSTRIES LIMITED**
**1-1 Tsutsuicho 1-chome Chuo-ku**
**Kobe-shi Hyogo-ken (JP)**

(72) Inventor : **Ochiai, Kiyoshi**
**25-45 Ooikemiyamadai, Kita-ku**
**Kobe-shi, Hyogo-ken (JP)**

(74) Representative : **Stewart, Charles Geoffrey**
**SP TYRES UK LIMITED Tyre Technical Division**
**Fort Dunlop, Erdington, Birmingham B24 9QT (GB)**

Jouve, 18, rue Saint-Denis, 75001 PARIS

## Description

The present invention relates to a radial tyre which is suitable for heavy duty vehicles such as trucks, buses, light trucks and the like.

Lately, there is a requirement to decrease the total cost in relation to maintainability of tyres and tyre life.

As to the maintainability, it is necessary to reduce the frequency of changing the tyre location on the vehicle, i.e. tyre rotation, by improving resistance to wear and by increasing resistance to uneven wear. With regard to total life, it is desirous to increase the number of retreads by improving the durability of the carcass and belt layer.

In for example, Japanese Patent Applications laid-open No 60-61305, 61-200004 and so on, it has been proposed to improve the performances of radial tyres for heavy duty vehicles by adjusting the carcass profile. The former aims to reduce rolling resistance while maintaining the wet performance by deviating the carcass profile from the natural equilibrium configuration of the carcass, and the latter is particularly based on a carcass profile where the radius of curvature of the carcass at the shoulder is decreased when the 100% standard internal pressure is applied to the tyre from the 5% pressure, whereby the cut resistance of the tread, wear resistance, high speed durability, low fuel consumption, steering stability and the like are improved in good balance without deteriorating the ride quality and so on.

Furthermore, as to the retreadability of a tyre, in order to improve the durability of the tyre, there are very many proposals concerning carcass cords, breaker cords, construction, reinforcing construction of the bead region and the like, in addition, many kinds of proposals concerning the carcass profile.

However, the above-mentioned prior art Japanese Patent Applications laid-open 60-61305, 61-200004 and other proposals with regard to carcass profiles have no relation to an improvement in abnormal wear resistance of tyres. In addition, prior proposals concerned with carcass profiles changes by the internal air pressure in tyres or the carcass profile of tyre relate only to changes in the new tyre. A tyre corresponding to the preamble of claim 1 is known, e.g. from EP-A- 0273558.

It is hence an object of the present invention to provide a radial tyre which improves tyre maintainability and durability so as to increase the total life durability so as to increase the total life of the tyre including retreads to give a reduction in total cost by improving wear resistance and abnormal wear.

This object is achieved, according to the present invention, by a radial tyre comprising the features of claim 1.

Thus is provided a reduction of frequency of necessary tyre rotation by the resultant increase in wear resistance and reduced abnormal wear. This it was discovered was because of the large influence of profile on abnormal wear of the tyre and in particular, the difference between the carcass profile of the new tyre and that after running.

Also the inventor found that even when the tyre ran for a long period in the state of not inducing tread wear, the carcass profile of the tyre, in accordance with load subjected to the tyre, changed with deformation of its components such as the carcass, belt, tread and the like. The present invention also controls these changes in the carcass profile and abnormal wear is prevent and the tyre performances are maintained for long terms.

Also change of carcass profile is reduced by defining the ratio between the radius of curvature at the upper region of sidewall and the radius at lower region of the sidewall as above. At the same time the definition of the ratio between the radius of the tread surface and the tyre width together with the carcass profile other characteristics of the tyre, for example, wear resistance, uneven wear resistance such as rapid shoulder wear and cut resistance can be improved.

Further details and an embodiment of the present invention will now be described, by way of example, referring to the attached drawings, in which:-

Figure 1 is a sectional view showing an embodiment of the invention;

Figure 2 is a graph showing the relation between the varying camber values and the ratio R1/R2;

Figure 3 is a graph showing the varying tread surface of embodiments;

Figures 4 and 5 are graphs showing the varying tread surface of the prior art tyres.

In tyres of this type there are the so-called rounder tread surface phenomenon and the flatter tread surface phenomenon. These are shown for an example tyre of size 10.00R20 14PR mounted on a standard rim and with a tread width in the range of 180 to 200mm where the tread surface is provided with a radius of curvature as shown in Figures 4 and 5 with the solid line along the tread surface T1 of the new tyre and the dotted line along the tread surface T2 of the used tyre. When the radius TR2 of the tread surface T2 of the used tyre has become smaller than the radius TR1 of the new tyre. This is the so-called rounder phenomenon. On the contrary, as shown in Figure 5, when the tread surface becomes flat after running, that is, the radius TR2 becomes larger than the radius TR1, it is called the flatter phenomenon.

EP 0 397 380 B1

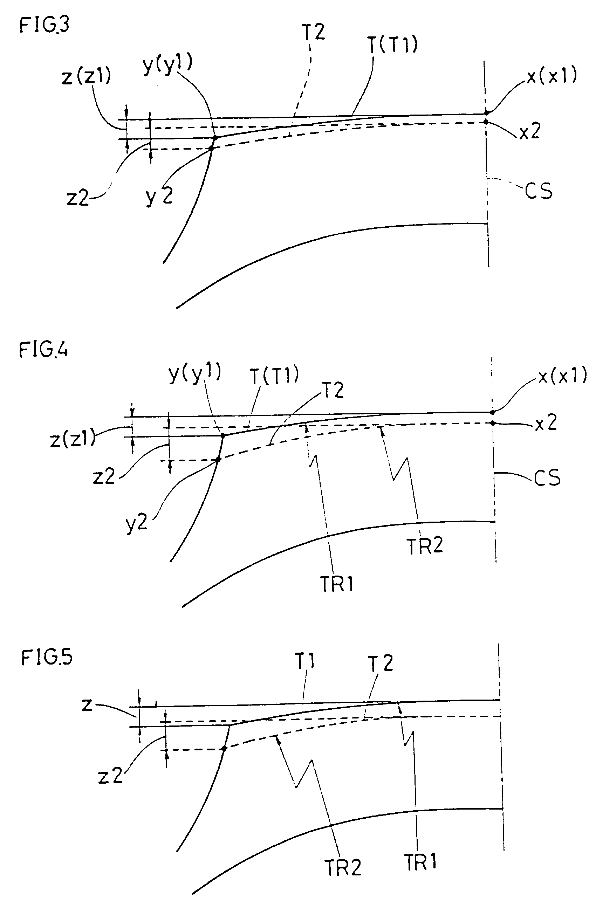

By such phenomenon, the camber height Z2 of the used tyre varies from the camber height Z1 of the new tyre. The camber height Z being the difference between the radial heights of the equator point X on the tread surface T and the tread edge Y on the tread surface. For example, in the case of the rounder phenomenon as shown in Figure 4, the camber height Z2 becomes large in comparison with the camber height Z1 of the new tyre, and in the case of the flatter phenomenon as shown in Figure 5, the camber height Z2 becomes small in comparison with that Z1 of the tyre tyre. Therefore, ideally speaking, the tread surface should be such that, as shown in Figure 3, the camber height Z2 of the tread surface T2 after running become approximately equal to the camber height Z1 of the tread surface of the new tyre.

The inventor found that his invention affected such changes in camber height Z by the effect on the carcass profile.

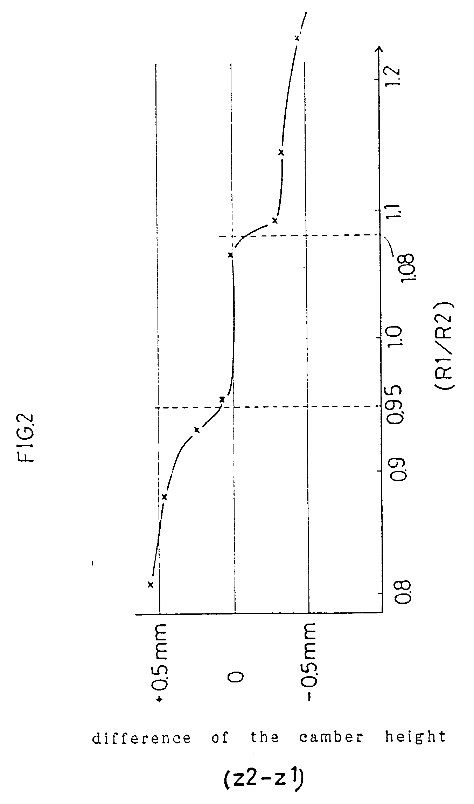

Figure 2 is a graph showing the relation between the ratio R1/R2 of the radius R1 in the upper region C1 of the sidewall to the radius R2 in the lower region C2 of the sidewall on the abscissa and the difference (Z2-Z1) of the camber height Z between the used tyre and the new tyre on the ordinate.

Incidentally, such relation was obtained by a running test for the 10.00R20 14PR type mounted on a specific standard rim of size 7.50V x 20 and inflated with air to the standard maximum pressure of $7.25 kgf/cm^2$. The tyre was run for 10,000km under a specific maximum design load of 2,700kg without wear, and the camber heights were measured before and after running. In the graph (o) on the ordinate means no change in camber height Z, and (+) means an increase of the camber height Z2 after running so that the tread surface T2 became rounder, and (-) means that the tread surface became flatter.

In Figure 2, because the range of the ratio R1/R2 is in the range of 0.95 to 1.08 the difference (Z2-Z1) of the camber height Z has become approximately zero.

The upper region (C1) is defined between a belt outer edge point (a) at which a vertical line extending in the radial direction from the axial outer edge (e) of the belt ply having the narrowest width among the three belt plies counted from said carcass side intersects said carcass and a maximum width point (b) of said carcass at an overall maximum width point (f) of a tyre. The lower region (C2) is defined between said maximum width point (b) and an inflection point (c) on the carcass of which height from a rim sheet of said rim in radial direction is 1.8 times the flange height of said rim.

Furthermore, the radius R1 means a radius of curvature which can overlap with the upper region C1 in the range more than 90% of the upper region C1 in the standard state, and the radius R2 means a radius of curvature which can overlap with the lower region C2 in the range more than 90% thereof.

Incidentally, "overlap in the range more than 90%" means that each curvature has a correct arc part and, in strict meaning, it is included that each region overlaps perfectly with each curvature in the range for more than 90% of the region, in addition each region extends between a curvature having the 99.5% radius and a curvature having 100.5% radius in the range more than 90% of the region.

Furthermore, in the new tyre under said standard state, the radius RT1 of curvature of the tread surface and the tyre maximum width SW satisfy the relation such as $1.28 \leq TR1/SW \leq 1.95$. This is to maintain wear resistance, resistance to abnormal wear such as shoulder wear and cut resistance. If the ratio TR1/SW is less than 1.28, the tread surface becomes too round, thereby wear on the tread crown region is accelerated, resistance to abnormal wear becomes poor, in addition, the ground contacting pressure becomes higher so that cut resistance decreases. If it is more than 1.95, the ground contacting pressure on the shoulder region becomes larger, so that heat generation in the tread internal region at the shoulder edge becomes larger and tyre endurance deteriorates.

Furthermore, the range of the ratio R1/R2 maintains the tread radius TR1 of a new tyre event after running, thereby dimensional changes of each parts, in particular, the change of the ground contacting print (foot print) is restrained so as to lessen the change of a carcass profile during full tyre life from a new tyre to the retread tyre. Accordingly, the tyre performances are maintained at the state of new tyre during the tyre life.

Such merit as above described increases high speed durability and reduces heat generation, thereby retreadable number of a tyre is increased to as to reduce total tyre cost.

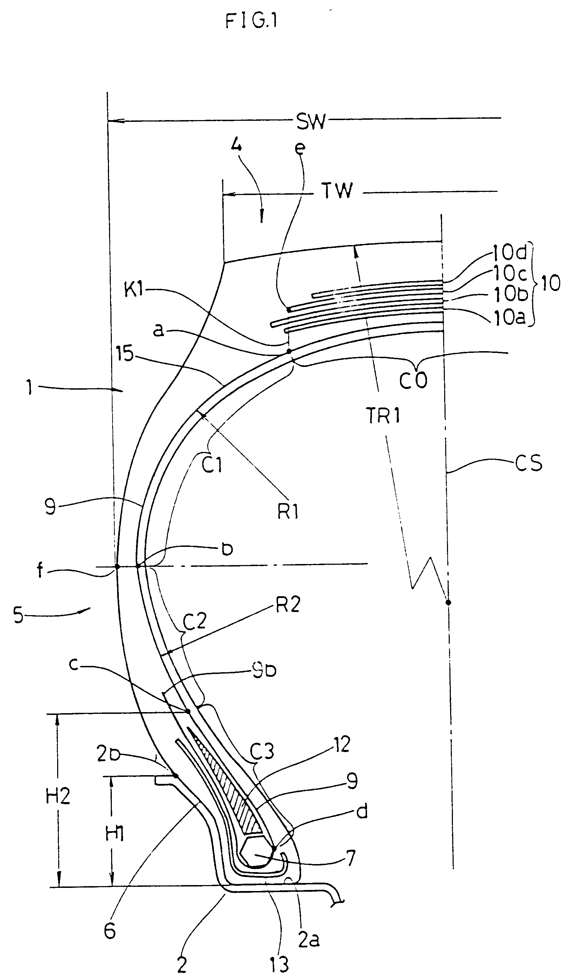

As a detailed example a 10.00R20 14PR new radial tyre 1 for heavy duty vehicles, which is mounted on a standard rim of 7.50V x 20 size and inflated to a standard interval pressure ($7.25 kgf/cm^2$) without load, is shown in Figure 1.

The radial tyre 1 comprises a carcass 9 extending from a tread 4 through sidewalls 5 to bead regions 6 and turned up at each side around one of a pair of bead cores 7. A belt 10 is arranged radially outside the carcass 9 and under a tread 4. Each bead region 6 of the tyre 1 is provided with a bead apex 12 formed of hard rubber material or a pair of layers comprising hard rubber and soft rubber materials, and positioned between the carcass main portion 9a and its turned up portion 9b.

Furthermore, the bead region 6 is reinforced to increase its rigidity by a strengthening layer 13 made of steel cords and other various kinds of known reinforced constructions which are not shown in the drawings

3

such as reinforced layers made of organic fibre cords and a chaffer used to prevent a tyre from chafing against its rim and the like.

The carcass 9 comprises at least one carcass ply containing non-extensible or low-extensibility carcass cords such as steel or the like laid at an angle of 70° to 90° with respect to equator. In this embodiment, the carcass 9 comprises one carcass ply of steel cords of 7x4/0.175mm embedded in topping rubber. The carcass profile 15 is defined as a centre line passing through the centre of the carcass 9 in its thickness, and the carcass profile 15 is shown as the carcass 9 with a solid line in Figure 1.

The belt 10 comprises a number of belt plies each superimposed one upon another from the carcass 9, for example, it here comprises four layers of No 1 - No 4 belt plies 10a...10d. Each belt ply 10a...10d contains non-extensible cords such as steel cords or low-extensibility cord such as aromatic polyamide cord, in this embodiment steel cords of 1 + 3/0.20 + 1 x 6/0.38mm are employed.

The maximum width of the belt layer 10, that is, the width of the widest belt ply among the four belt plies 10a...10d, is 0.80 to 0.95 times the tread width TW of the tread 4 so that preferably the tyre 1 is reinforced over the full width of its tread. At least two belt plies among belt plies 10a...10d, in this embodiment, three belt plies 10b...10d contain belt cords laid at an angle of 10° to 25° with respect to the equator of the tyre, in this case, laid at relatively small angle of 16°, in addition, by arranging each successive belt ply 10a...10d so as to cross the belt cords of each other adjacent ply, so that the tread 4 is provided with a large hoop effect in the conventional manner.

One belt ply, in this embodiment, the inner ply 10a has its belt cords laid at an angle of 67° (i.e. in the range of 40 to 70°), whereby the belt plies 10a 10d together with the carcass cord can form the high stiff triangular construction so that the necessary stiffness of the tread 4 is provided.

The carcass profile 15 is divided into four regions; a belt region C0 which is under the belt layer 10, the upper region C1 which extends from the belt region C0 and is positioned in the radially outer part of the sidewall 5, a lower region C2 which extends radially inwardly from the upper region C1, and a bead region C3 which is positioned at the bead part 6. The belt region C0 is the region which is almost not deformed even under inflation, because of the large stiffness provided by the stiff hoop effect and the triangular construction of the belt layer 10.

Further, the belt region C0 is defined as the range between the belt outer edge points (a) and (a) inclusive of the equatorial plane CS as its centre, said belt outer edge point (a) is a point at which a vertical line K1 extending in the radial direction from the axially outer edge (e) of the No 3 belt ply 10C having the narrowest belt width among three belt plies 10a, 10c counted successively from the carcass side intersects the carcass profile 15.

As previously mentioned, there are at least three belt plies 10a...10c between said belt outer edge points (a) and (a) so as to provide the necessary large stiffness.

The bead region C3 is the range between the contacting point (d) at which the main portion 9a of the carcass 9 contacts with the bead core 7 and the inflection point (c). The inflection point (c) is the point on the carcass profile 15 at which the height H2 in the radial direction from the rim sheet 2a of the rim 2 is 1.8 times the flange height H1 in the radial direction from the rim sheet 2a to the top of the rim flange 2b. This bead region C3 is the region where a large stiffness is provided by the bead reinforcements such as the bead apex 12, the strengthening layer 13 and the like. In the bead region C3, the carcass profile 15 is curved convexly inwardly. At the inflection point (c) or the vicinity thereof, the lower region C2 with the outwardly convex surface is smoothly connected to said bead region C3.

The upper region C1 is defined as the range between the belt outer edge point (a) and the maximum width point (b) of the carcass profile 15 at which the tyre overall width is maximum. The lower region C2 is the range between the maximum width point (b) and the inflection point (c), the carcass profile 15 is outwardly convex in both region C1 and C2.

Furthermore, the upper region C1 and the lower region C2 are relatively small in stiffness, thereby the resistance to deformation is small so they may be deformed under load.

Therefore, the carcass profiles 15 of the upper region C1 and the lower region C2 are optionally adjusted by modification of each profile and the stiffness of the belt region C0 and the bead region C3, and the carcass length which is the length of the carcass profile 15 in the cross section inclusive of the tyre axis between the contacting points (d), (d), in addition, rubber thickness of each region, the distance between beads in a mould (the clip ring width) and its profile.

From such point of view, the inventor of the present invention noticed that the difference of the camber height Z between a new tyre and a used tyre as shown in Figure 2 can be reduced so as to provide a tyre of which the tread surface profile and the carcass profile change by very small values by employing his radial profile in the tyre cross section where the radius ratio of R1/R2 is set in the range of 0.95 to 1.08 where R1 is the radius of curvature of the upper region C1, and R2 is the radius of curvature of the lower region C2.

Each radius of curvature R1 and R2 means the radius of curvature which can overlap or match each upper region C1 and lower region C2 in the range more than 90% thereof.

Incidentally, said phrase "overlap in the range more than 90%" means that each curvature has a correct arc part and, in strict meaning, it is included that each region overlaps perfectly with each curvature in the range more than 90% of the region, in addition each region extends between a curvature having the 99.5% radius and a curvature having 100.5% radius in the range more than 90% of the range. More preferably, each region extends between a curvature having the 99.75% radius and a curvature having 100.25% radius in the range more than 90% of the region.

By employing the ratio R1/R2 of the range, as shown in Figures 2 and 3, the difference (Z2-Z1) of the camber height Z is reduced.

More, the difference of the camber height Z means the difference (Z2-Z1) in which the camber height Z1 is the height in the radial direction from the equatorial point X1 of the tread surface to the tread edge Y1 in a new tyre, and the camber height Z2 is the height in the radial direction from the equatorial point X2 to the tread edge Y2 in a used tyre. If the difference shows a plus sign (+) as shown in Figure 4, the tread radius TR2 of the tread surface T2 of the used tyre is smaller than tread radius TR1 of the new tyre. Accordingly the tread radius is rounded by running. More, a minus sign (-) on the ordinate in Figure 2 means that the tread surface becomes flatter on the contrary.

The above mentioned range of the radius ratio R1/R2, as shown in Figure 2, is a range that the difference (Z2-Z1) becomes substantially zero.

As above described, the present invention is based on the face that the performance before and after running of the tyre has a correlation with the carcass profile and by employing the radius ratio R1/R2, the carcass profile is optimised so as to minimise the change of the carcass profile before and after running of the tyre.

Furthermore, the ratio TR1/SW is set within the range of 1.28 to 1.95 in which TR1 is the radius of tread surface of a new tyre under the standard internal pressure and SW is the distance between the overall maximum width points (f) and (f).

This is to maintain resistance to abnormal wear, wear resistance, shoulder wear resistance, cut resistance and durability. When the ratio TR1/SW is less than 1.28, the tread surface becomes too round, thereby the ground contacting pressure increases on the crown region to accelerate tread centre wear, so that wear life and cut resistance around this region decrease.

When the ratio TR1/SW is more than 1.95, on the contrary, the ground contacting pressure on the should region increases so as to generate an internal heat excessively, as the result, the durability of the tyre decreases too much.

Accordingly, in order to increase wear resistance, abnormal wear resistance, cut resistance and durability by optimising the distribution of the ground contacting pressure, the ratio TR1/SW of the new tyre is set to be in the range.

Prototype tyres were made to show the true affect of the invention by making a 10/00R20) tyre with the specifications as shown in Table 1 and Figure 1. High speed durability, cut resistance, shoulder wear resistance, heat generation, wear resistance and retreadability were evaluated and the test results are shown in Table 1.

In each tyre, the carcass composed one carcass ply, containing steel cords (7x4/0.175mm) laid at an angle of 90° with respect to the equator. The belt layer composed four belt plies containing steel cords (1+3/0.20 + 1x6/0.38mm). Each cord of the innermost belt ply 10a and other plies 10b, 10d laid at 67°, respectively, with respect to the equator, in addition, each cord of belt plies 10a, 10d crossed each other between the adjacent belt plies.

Each radius R1, R2 and TR1 was measured in the standard state with the tyre mounted on a standard rim (7.50V x 20) and inflated with air to the standard maximum pressure of 7.25ksc. The radius TR2 measured on the tyre after running for a distance of 10,000km on a drum running tester of 1.8m diameter under 2,700kg load at 50km/h speed.

Test results are shown in Table 1, wherein the performances are expressed by an index on the basis that the comparative example No 1 is 100, the larger the number of the index, the better the tyre. After each test item listed in the left space of Table 1 the pass levels are given in parenthesis.

The high speed durability test was performed by running the tyre inflated to the maximum pressure specified by JIS on a drum with the application of a load equivalent of 140% of the maximum value specified by JIS. Running speed was raised from 80km/h by steps at intervals of 10km/h each 2 hours until the test tyre broke down and the total running distance was recorded.

In these embodiments, even ground contacting pressure is provided on the tread surface to make it possible to distribute well balanced pressure and deformation, as the result, the high speed durability is thought to be improved.

Cut resistance was evaluated by the cut depth produced on the tread when a tapered jig like a wedge whose tip has a 0.5mm radius, a tapered angle of 25° and a width 10mm was pressed with a certain intensity of force onto the tread.

Next, as regards to the resistance of the tread to wear and shoulder wear, comparison tests using actual vehicles running on a highway and a conventional paved road with the ratio being 7:3, were performed. The amounts of wear of the treads were compared by measurements of groove depth of the longitudinal grooves at the crown and shoulder regions after 80,000km running, (amount of wear is the average difference between groove depth before and after running.) Shoulder wear is defined as the difference between the wear amounts of the shoulder region and that of the crown region.

Resistance to heat generation was observed by the temperature rise at the axial outer edge of the belt layer in a tread after running till the temperature became constant. As to the embodiments, as above described, by keeping the distribution of the ground contacting pressure even and at well-balanced shape, heat resistance together with cut resistance is thought to be improved.

Durability of the retread tyre is evaluated by the running distance when the retread tyre is run until its limit, such retread tyre is made by repeatedly bonding the precured tread of the tyre case which is obtained from the test tyre worn till its wear limit.

In each case, the embodiments were superior to conventional tyres, in addition embodiments showed that wet grip performance, steering stability, ride feeling, fuel consumption and the like are equivalent to or more than the conventional tyres.

Table 1

| | | Embodiment 1 | Embodiment 2 | Embodiment 3 | Embodiment 4 | comparision1 | comparision2 | comparision3 | comparision4 | comparision5 |
|---|---|---|---|---|---|---|---|---|---|---|
| R 1 | | 96.9 | 110.2 | 102 | 106 | 96.9 | 111.2 | 104 | 108 | 119 |
| R 2 | | 102 | 102 | 102 | 110 | 103 | 102 | 102 | 100 | 122 |
| R 1／R 2 | | 0.95 | 1.08 | 1.00 | 0.96 | 0.94 | 1.09 | 1.02 | 1.08 | 0.98 |
| T R 1 | | 480 | 480 | 480 | 560 | 480 | 480 | 470 | 570 | 425 |
| T R 1／S W | | 1.28 | 1.45 | 1.45 | 1.95 | 1.25 | 1.45 | 1.50 | 1.97 | 1.25 |
| drum running test | high speed durability (100) | 100 | 100 | 100 | 100 | 100 | 85 | 100 | 95 | 105 |
| | cut resistance (105) | 105 | 110 | 108 | 105 | 100 | 110 | 100⁻ | 110 | 90 |
| | resistance to heet generation (100) | 105 | 115 | 110 | 105 | 100 | 118 | 100⁻ | 115 | 90 |
| actual vehicles running test | resistance to shoulder wear (105) | 100 | 100 | 100 | 100 | 100 | 85 | 100 | 80 | 110 |
| | resistance to wear (105) | 105 | 107 | 105 | 110 | 100 | 110 | 75 | 115 | 90 |
| | durability of a retreaded tyre (105) | 105 | 115 | 110 | 105 | 100 | 90 | 100 | 85 | 110 |

EP 0 397 380 B1

## Claims

1. A radial tyre comprising a carcass (9) composed of at least one carcass ply containing cords laid substantially in radial directions and extending under a tread (4) through sidewalls (5) to bead regions (6) and wrapped at each edge around bead cores (7), and a belt (10) containing belt cords laid radially outside said carcass (9) and under said tread (4) wherein in the standard state of the tyre inflated to its standard internal pressure mounted on its standard rim (2), the carcass profile defined by the centre line passing through the centre of the said carcass (9) in its thickness has an upper region (C1) curved convexly outwardly and defined as between an outer edge point (a) and the maximum width point (b) of said carcass at the overall maximum width point (f) of the tyre, a lower region (C2) curved convexly outwardly and defined between the carcass maximum width point (b) and an inflection point (c) on the carcass, and a bead region (C3) curved convexly inwardly and defined between said inflection point (c) and a contacting point (d) at which said carcass (9) contacts the bead core (7), characterized in that the belt (10) is composed of at least three belt plies (10a...10d), said belt cords are laid at an acute angle to the circumferential direction of the tyre, said outer edge point (a) is defined as a belt outer edge point (a) at which a vertical line (K1) extending in the radial direction from an axial outer edge (e) of a belt ply (10c) having the narrowest width amongst the three belt plies (10a,b and c) counted from the carcass side intersects the carcass (9), the height (H2) of said inflection point (c) from a bead rim seat (2a) of said rim (2) in the radial direction is 1.6 times the flange height (H1) of said rim (2), the upper region (C1) overlaps a single curvature having a radius R1 for the range of more than 90% thereof, the lower region (C2) overlaps a single curvature having a radius R2 for the range of more than 90% thereof, the ratio R1/R2 of said radius R1 to said radius R2 is 0.95 to 1.08 and the ratio TR1/SW of the radius TR1 of curvature of the tread surface to the tyre maximum width SW, which is the distance between said overall maximum width points (f) in the said standard state is 1.28 to 1.95.

## Patentansprüche

1. Radialreifen mit einer aus mindestens einer Karkasslage zusammengesetzten Karkasse (9), welche im wesentlichen in Radialrichtung gelegte Korde enthält und sich unter einem Laufstreifen (4) durch Seitenwände (5) zu Wulstbereichen (6) erstreckt und an jeder Kante um Wulstkerne (7) zurückgeschlagen ist und einem Gürtel (10), der Gürtelkorde enthält, die radial außerhalb der Karkasse (9) und unter dem Laufstreifen (4) gelegt sind, wobei im Standardzustand des auf seinen Standard-Innendruck aufgepumpten und an seiner Standardfelge (2) angebrachten Reifens das durch die durch die Mitte der Karkasse (9) in ihrer Dicke hindurchtretende Mittenlinie definierte Karkassprofil einen oberen Bereich (C1) besitzt, der konvex nach außen gekrümmt und so definiert ist, daß er zwischen einer äußeren Kantenstelle (a) und der Stelle (b) maximaler Breite der Karkasse an der Stelle (f) maximaler Gesamtbreite des Reifens liegt, einen unteren Bereich (C2), der konvex nach außen gekrümmt und zwischen der Stelle (b) der maximalen Karkassbreite und einem Wendepunkt (c) an der Karkasse definiert ist, und einen konvex nach innen gekrümmten Wulstbereich (C3), der zwischen dem Wendepunkt (c) und einer Berührungsstelle bestimmt ist, an der die Karkasse (9) den Wulstkern (7) berührt, dadurch gekennzeichnet, daß der Gürtel (10) zusammengesetzt ist aus mindestens drei Gürtellagen (10a...10d), in welchen Gürtelkorde mit einem spitzen Winkel zur Umfangsrichtung des Reifens gelegt sind, daß die äußere Kantenstelle (a) definiert ist als eine äußere Kantenstelle (a) des Gürtels, bei der eine sich in Radialrichtung von einer axial äußeren Kante (e) einer Gürtellage (10c) mit der geringsten Breite unter den drei Gürtellagen (10a, 10b und 10c), von der Karkasseite aus gezählt, erstreckende vertikale Linie (K1) die Karkasse (9) schneidet, die Höhe (H2) des Wendepunkts (c) von einem Felgenwulstsitz (2a) der Felge (2) in der Radialrichtung das 1,6-fache der Hornhöhe (H1) der Felge (2) beträgt, der obere Bereich (C1) eine einzelne Krümmung mit einem Radius R1 für einen Bereich von mehr als 90% desselben überdeckt, der untere Bereich (C2) eine einzige Krümmung mit einem Radius R2 über einen Bereich von mehr als 90% desselben überdeckt, das Verhältnis R1/R2 des Radius R1 zu dem Radius R2 0,95 bis 1,08 beträgt und das Verhältnis TR1/SW des Krümmungsradius TR1 der Laufstreifenfläche zu der maximalen Breite SW des Reifens, die der Abstand zwischen den Stellen (f) maximaler Gesamtbreite in dem Standardzustand 1,28 bis 1,95 beträgt.

## Revendications

1. Pneumatique à carcasse radiale comportant une carcasse (9) composée d'au moins une nappe de carcasse qui contient des câblés placés pratiquement en direction radiale et disposés sous une bande de roulement (4) dans des flancs (5) vers des régions de talon (6) et enroulés à chaque bord autour de tringles (7), et une ceinture (10) contenant des câblés de ceinture disposés radialement vers l'extérieur de la carcasse (9) et sous la bande de roulement (4), d'une manière telle que, à l'état normal du pneumatique gonflé à sa pression interne normale, lorsqu'il est monté sur sa jante normale (2), le profil de carcasse délimité par la courbe centrale passant au centre de la carcasse (9) dans la direction de son épaisseur a une région supérieure (C1) à courbure convexe vers l'extérieur et délimitée comme étant comprise entre un point de bord externe (a) et le point (b) de largeur maximale de la carcasse au point de largeur maximale (f) de l'ensemble du pneumatique, une région inférieure (C2) courbée de façon convexe vers l'extérieur et délimitée entre le point (b) de largeur maximale de la carcasse et un point d'inflexion (c) formé sur la carcasse, et une région de talon (C3) courbée sous forme convexe vers l'intérieur et délimitée entre le point d'inflexion (c) et un point de contact (d) auquel la carcasse (9) est au contact de la tringle (7), caractérisé en ce que la ceinture (10) est composée d'au moins trois nappes de ceinture (10a,... 10d), les câblés de carcasse sont disposés suivant un angle aigu par rapport à la direction circonférentielle du pneumatique, le point de bord externe (a) est défini comme étant un point de bord externe de ceinture (a) auquel une verticale (K1) disposée en direction radiale depuis un bord axial externe (e) d'une nappe de ceinture (10c) ayant la plus faible largeur parmi les trois nappes de ceinture (10a, 10b et 10c) depuis le côté de la carcasse recoupe la carcasse (9), la hauteur ($H_2$) du point d'inflexion (c) par rapport à un siège (2a) de talon de la jante (2) en direction radiale est égale à 1,6 fois la hauteur (H1) du flasque de la jante (2), la région supérieure (C1) assure un recouvrement avec une seule courbure de rayon R1 sur plus de 90 % de son étendue, la région inférieure (C2) assurant un recouvrement avec une seule courbure de rayon R2 sur plus de 90 % de son étendue, le rapport R1/R2 du rayon R1 au rayon R2 est compris entre 0,95 et 1,08, et le rapport TR1/SW du rayon TR1 de courbure de la surface de la bande de roulement à la largeur maximale SW du pneumatique, qui est la distance comprise entre les points (f) de largeur maximale de l'ensemble du pneumatique à l'état normal, est compris entre 1,28 et 1,95.

## FIG.1

FIG.2

difference of the camber height

$(z2 - z1)$

FIG.3

FIG.4

FIG.5